# EUROPÄISCHE PATENTSCHRIFT

(11) **EP 1 483 632 B1**
(45) Veröffentlichungstag und Bekanntmachung des Hinweises auf die Patenterteilung: **22.03.2006**
(21) Anmeldenummer: 03708072.8
(22) Anmeldetag: 27.01.2003
(51) Int. Cl.: G05B 15/02, G05B 23/02

(54) **SYSTEM ZUR OPTIMIERUNG DES GESAMTWIRKUNGSGRADES EINER PRODUKTIONSANLAGE**
SYSTEM FOR OPTIMIZING THE OVERALL EFFICIENCY OF A PRODUCTION PLANT
SYSTEME POUR OPTIMISER LE RENDEMENT GLOBAL D'UNE INSTALLATION DE PRODUCTION

(30) Priorität: 27.03.2002 DE 10213870
(43) Veröffentlichungstag der Anmeldung: 08.12.2004
(73) Patentinhaber: Voith Paper Patent GmbH, 89522 Heidenheim (DE)
(72) Erfinder: FRIEDRICH, Jürgen, 74546 Crailsheim (DE); KICHERER, Manfred, 89518 Heidenheim (DE); KAISER, Stefan, 88213 Ravensburg (DE); BACH-BEZENAR, Günther, 85051 Augsburg (DE)
(86) Internationale Anmeldenummer: PCT/EP2003/000800
(87) Internationale Veröffentlichungsnummer: WO 2003/081350

(56) Entgegenhaltungen:
- EP-A- 0 467 257
- US-A- 5 649 448
- US-A1- 2002 032 495

## Beschreibung

Die Erfindung betrifft ein System zur computergestützten Optimierung des Gesamtwirkungsgrades einer Produktionsanlage oder zumindest einer Teileinheit einer Produktionsanlage zur Herstellung und/oder Veredelung von Materialbahnen.

Bei Produktionsanlagen, insbesondere bei Anlagen zur Papierherstellung handelt es sich um technisch aufwändige Großanlagen, die neben der eigentlichen Papiermaschine mit Nassteil, Trockenteil, Kalander, Roller und zugehörigen Peripherieeinheiten vorgeschaltete Einheiten wie z.B. Flotation, Sortierung, Deculatoren sowie nachgeschaltete Systeme wie Rollenaufwickeleinheiten sowie Rollenschneidmaschinen, die Rollenverpackung und den Rollentransport umfassen. Dazu gehören die jeweils erforderlichen elektrischen Antriebe, Pumpen, Vakuumanlagen, Chemikalienaufbereitung, Druckluftversorgung und dergleichen.

Aufgrund der für derartige Produktionsanlagen erforderlichen hohen Investitionssummen besteht größtes Interesse daran, diese Anlagen bestmöglich zu nutzen und Stillstandszeiten, welche den Gesamtwirkungsgrad der Anlage ausgesprochen störend verringern können, möglichst zu minimieren. Wie groß die Bedeutung der Minimierung von Stillstandszeiten ist, wird beispielsweise daran ersichtlich, dass solche Anlagen pro Tag durchaus eine Produktionsmenge von 1000 Tonnen Papier und mehr erreichen können, so dass bei einem angenommenen Tonnenpreis von etwa € 600,-- zu mehrstündigen Ausfällen führende Maschinenstillstände zu erheblichen Verlusten führen.

Das stets angestrebte Ziel der Minimierung von Stillständen lässt sich zum einen - allerdings nur in einem sehr begrenzten Umfang - durch ständige Verbesserung der Maschinenkomponenten selbst, zum anderen aber auch dadurch erreichen, dass generell versucht wird, die im praktischen Betrieb unvermeidbaren Stillstände hinsichtlich ihres zeitlichen Ausmaßes zu minimieren.

Letzterer Aspekt wird im Rahmen der vorliegenden Erfindung aufgegriffen, deren Aufgabe es ist, ein System zur computergestützten Optimierung des Gesamtwirkungsgrades einer Produktionsanlage, insbesondere einer Produktionsanlage zur Herstellung und/oder Veredelung von Materialbahnen zu schaffen, das es ermöglicht, im Betrieb der Anlage und insbesondere im Zusammenhang mit Stillständen der Anlage gewonnene Informationen so zu verarbeiten und zu verwerten, dass der Gesamtwirkungsgrad verbessert und auf hohem Wert gehalten werden kann.

Dies wird gemäß der Erfindung im wesentlichen erreicht durch einen ersten, zumindest die kontinuierlich im Dauerbetrieb zusammenwirkenden Einheiten der Gesamtanlage komponentenbezogen abbildenden Datenspeicher, zumindest einen zweiten Datenspeicher zum Abspeichern von sich auf definierte Arbeitsvorgänge und Abläufe beziehenden planbaren Arbeitsinhalten für geplante und ggf. nicht geplante Stillstände der Anlage, sowie wenigstens eine sowohl in Abhängigkeit von geplanten als auch von nicht geplanten Stillständen aktivierbare, computerbasierte Operations- und Verknüpfungseinheit zur Ermittlung von im Einzelfall erforderlichen Arbeitspaketen, Ersatzteilen und Verbrauchsmaterialien und dergleichen sowie deren anschließende Ausgabe über Display- und/oder Druckereinheiten.

Durch die in Abhängigkeit von der jeweils erforderlich Wartungsaufgabe gezielt steuerbare Verknüpfung des die jeweilige Produktionsanlage hinsichtlich aller ihrer relevanten Komponenten abbildenden ersten Datenspeichers mit einem zunächst aufgrund von Erfahrungswerten aufgebauten Datenspeicher für definierte Arbeitspakete und zugehörige Hardware-komponenten und auch Logistikdaten gelingt es von Anfang an, die erforderlichen geplanten Maschinenstillstände zu optimieren. Es kommt aber dann hinzu, dass insbesondere die in der zweiten Datenbank gespeicherten Informationen sowohl in Abhängigkeit von bei geplanten als auch bei nicht geplanten Stillständen gewonnenen Informationen und erkannten Fakten aktualisiert werden und die Aktualisierung dieser Datenbank eigendynamisch zu den angestrebten Optimierungen führt.

Bevorzugt sind im ersten Datenspeicher zumindest alle störungsrelevanten Komponenten und Komponentengruppen insbesondere ebenfalls aktualisierbar gespeichert, wobei es im Hinblick auf die Größe der Gesamtanlage typisch ist, dass in der Gesamtanlage Komponenten und Komponentengruppen mehrfach vorkommen. Durch Schaffung einer ansprechbaren Sammelkennung für diese gleichen Komponenten und Komponentengruppen lässt sich im Falle der Störung einer Komponente oder einer Komponentengruppe eine Signalisierung bezüglich der in anderen Anlagenteilen vorhandenen gleichen Komponenten und Komponentengruppen erzielen, die es ermöglicht, mittels vorsorglicher Maßnahmen deren analog zu erwartende vorzeitige Störung zu vermeiden und damit wiederum unerwünschte Stillstandsvorgänge zu verhindern.

Von besonderem Vorteil ist es, für den Fall nicht geplanter Stillstände, die aufgrund von nicht vorhersehbaren Störungen immer wieder auftreten können, in Abhängigkeit von der jeweiligen Störungsanalyse aus den aktuell gespeicherten planbaren Arbeitsinhalten für den betreffenden Störfall relevante Arbeitsinhalte auszuwählen und auszugeben.

Dabei umfassen die gespeicherten und aktivierbaren Arbeitsinhalte zumindest Datensätze, die Informationen bezüglich Ersatzteilen, Verschleiß- und Verbrauchsmaterialien, Werkzeugen, erforderlichen Transportleistungen, Personalbedarfsdaten, insbesondere auch unter Dringlichkeitsaspekten, sowie zeitliche Ablauf- und Einsatzplanungsdaten enthalten. Aus diesen so gewonnenen, jeweils aktuellen Daten lassen sich nach Beendigung der entsprechenden Arbeiten wiederum auf einfache Weise Informationen zur Abrechnung von Leistungen, zur Zuordnung von abzurechnenden Leistungen sowie Daten für die Materialwirtschaft und die Dokumentation gewinnen.

Des weiteren ist es möglich, zumindest die Daten der zweiten Datenbank über eine Istwerterfassung von Daten der Gesamtanlage direkt zu modifizieren, indem beispielsweise durch eine Verschleißerfassung der aktuelle Zustand von Komponenten insbesondere bei ungeplanten, grundsätzlich aber auch bei geplanten Stillständen berücksichtigt werden kann.

Mittels des erfindungsgemäßen Systems ist es auch möglich, eine gezielte Aufgabenverteilung hinsichtlich der bei Stillständen der Anlage durchzuführenden Arbeiten zu erreichen. Über die computerbasierte Operations- und Verknüpfungseinheit kann nämlich auch bei nicht geplanten Stillständen in Abhängigkeit von der Dauer der Fehleranalyse durch vorzugsweise zwangsgesteuerte Anforderung von Zusatzkompetenz und Zusatz-Dienstleistung eine Minimierung der Stillstandszeit erreicht werden.

Der Einsatz des erfindungsgemäßen Systems ermöglicht es vor allem auch, die Anlage selbst mit einem Minimum an Personen im Normalbetrieb zu betreuen und die bei Maschinenstillständen erforderlichen Arbeiten in gezielt geplanter und optimierter Weise von einer sachkundigen Dienstleistungsgruppe durchführen zu lassen. Ermöglicht und begünstigt wird dies durch die ständig aktualisierten, gezielt miteinander verknüpfbaren Datenbanken und die im jeweiligen Einzelfall gezielt erstellbaren, anlagentypischen Arbeitskataloge, Meldungen und Aufträge sowie die dann wiederum nach unterschiedlichen Kriterien auswertbaren erhaltenen Dokumentationen.

Besonders vorteilhaft ist die Verwendung des erfindungsgemäßen Systems bei einer Anlage zur Papierherstellung, die eine Papiermaschine mit vorgeschalteter Stoffaufbereitung und Konstant-Teil zur Entlüftung der Faserstoffsuspension und zur Einstellung der Konzentration der Faserstoffsuspension sowie zumindest eine nachgeordnete Bahn-Aufwickeleinheit umfasst.
Eine Maschine zur Herstellung und/ oder Veredelung einer Papier-, Karton-, Tissue- oder einer anderen Faserstoffbahn, die in der erfindungsgemäßen Weise optimiert werden kann, umfasst zumindest eine Stoffaufbereitung zur produktionsgerechten Bereitstellung der Faserstoffsuspension, die insbesondere auch einen Deinkingteil umfassen kann, sowie die eigentliche Herstellungsmaschine einschließlich einer Rollenaufwickeleinheit. Speziell kann vor der Stoffaufbereitung noch die Rohstoffbereitstellung in die Gesamtanlage integriert werden, wobei zwischen Stoffaufbereitung und Herstellungsmaschine noch der konstante Teil zur Entlüftung der Faserstoffsuspension sowie zur Einstellung der Konzentration der Faserstoffsuspension vorgesehen ist. Am Ende der Herstellungsmaschine kann die Faserstoffbahn noch online vor dem Aufwickeln geglättet und/oder gestrichen werden, wobei anschließend das Schneiden der Rollen oder Formatpapiere und das Verpacken online oder offline stattfinden kann.

Weitere Besonderheiten der Erfindung sind in den Unteransprüchen angegeben.

Unter Bezugnahme auf die Zeichnungen werden nachfolgend einige zur Erfindung gehörende Teilaspekte ergänzend erörtert.

In der Zeichnung zeigt:
- Fig. 1: eine schematische Darstellung und Beschreibung einer Produktionsanlage zur Herstellung von Papier, und
- Fig. 2: eine graphische Darstellung der durch die Erfindung erzielbaren Minimierung der ungeplanten Stillstände der Produktionsanlage.

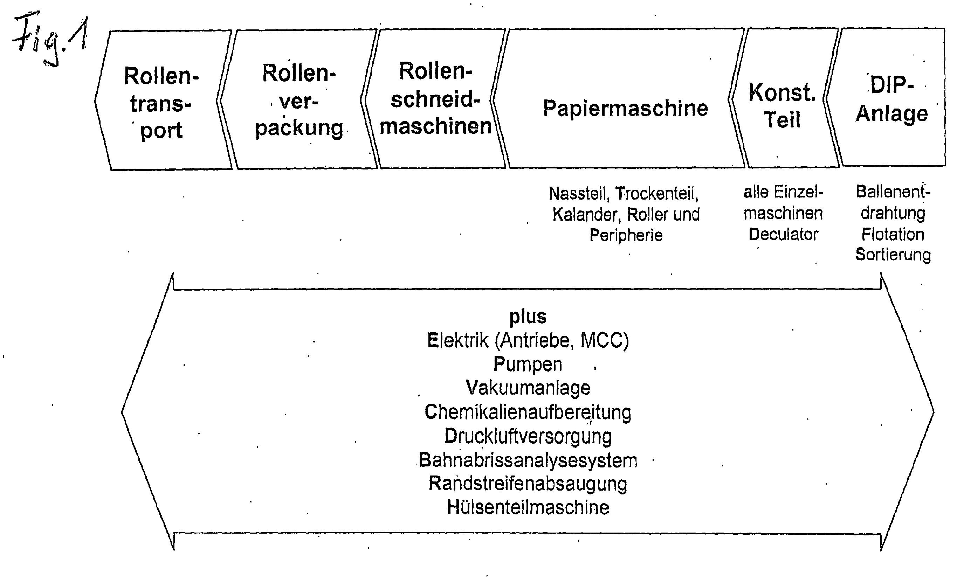

In der schematischen Darstellung nach Fig. 1 sind die typischen Komponenten einer Papier-Produktionsanlage entsprechend dem Fertigungsgang von rechts nach links dargestellt. Jede dieser Komponenten der Produktionslage umfasst wiederum eine Mehrzahl von Einzelbestandteilen, die in Fig. 1 zumindest zum Teil angeführt sind. Zu dieser Gesamtanlage gehören noch eine Vielzahl von Hilfsanlagen und Hilfseinrichtungen, die in dem Doppelpfeil gemäß Fig. 1 zumindest zum überwiegenden Teil aufgeführt sind.

Ein wesentlicher Aspekt der Erfindung besteht darin, dass zumindest alle störungsanfälligen und zu wartenden Komponenten der Gesamtanlage in einer ersten Datenbank abgebildet sind, so dass den entsprechenden realen Elementen der Anlage ein diese Elemente zumindest definierender Datensatz in der Datenbank vorhanden ist, wobei über entsprechende elektronische Einheiten Aktualisierungsmöglichkeiten vorgesehen sind.

Neben den geplanten Stillständen einer derartigen Produktionsanlage, die im Verlauf des Betriebs erfindungsgemäß ebenfalls verringert werden können, kommt es im Rahmen der Erfindung insbesondere auch darauf an, die ungeplanten Stillstandszeiten zu minimieren.

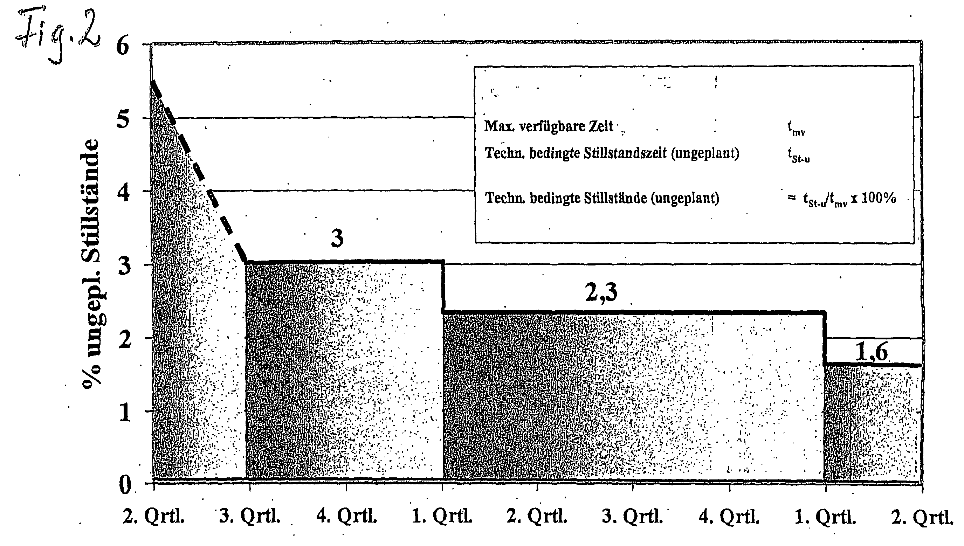

Derartige ungeplante, technisch bedingte Stillstände sind in der graphischen Darstellung nach Fig. 2 über der in Quartale unterteilten Zeitachse aufgetragen, und diese Graphik verdeutlicht anhand eines Beispiels die durch die Erfindung erreichbare Minimierung der ungeplanten Stillstände, die in der Praxis zu einer deutlichen Verbesserung des Gesamtwirkungsgrades der Anlage führt. Die Art und Weise, wie diese Reduzierung erreicht wird, ist vorstehend im Einzelnen bereits erläutert worden.

## Patentansprüche

1. System zur computergestützten Optimierung des Gesamtwirkungsgrades einer Anlage zur Papierherstellung, die eine Papiermaschine mit vorgeschalteter Stoffaufbereitung und Konstant-Teil zur Entlüftung der Faserstoffsuspension und zur Einstellung der Konzentration der Faserstoffsuspension sowie zumindest eine nachgeordnete Bahn-Aufwickeleinheit umfasst oder zumindest einer Teileinheit einer derartigen Anlage,
mit einem ersten, zumindest die kontinuierlich im Dauerbetrieb zusammenwirkenden Einheiten der Gesamtanlage komponentenbezogen abbildenden Datenspeicher,
zumindest einem zweiten Datenspeicher zum Abspeichem von sich auf definierte Arbeitsvorgänge und Abläufe beziehenden planbaren Arbeitsinhalten für geplante Stillstände der Anlage,
sowie wenigstens eine sowohl in Abhängigkeit von geplanten als auch insbesondere von nicht geplanten Stillständen aktivierbare, computerbasierte Operations- und Verknüpfungseinheit zur Ermittlung von im Einzelfall erforderlichen Arbeitspaketen, Ersatzteilen und Verbrauchsmaterialien und dergleichen sowie deren anschließende Ausgabe über Display- und/oder Druckereinheiten,
**dadurch gekennzeichnet, dass**
zumindest die im zweiten Datenspeicher für definierte Arbeitspakete und zugehörige Hardware-Komponenten und Logistikdaten zunächst aufgrund von Erfahrungswerten gespeicherten Daten sowohl in Abhängigkeit von bei geplanten als auch insbesondere bei nicht geplanten Stillständen gewonnenen Informationen über Direkteingaben zur Erzielung eigendynamischer Optimierungen aktualisiert werden.

2. System nach Anspruch 1,
**dadurch gekennzeichnet, dass**
im ersten Datenspeicher zumindest alle störungsrelevanten Komponenten und Komponentengruppen aktualisierbar gespeichert und vorzugsweise gleiche Komponenten und Komponentengruppen mit einer ansprechbaren Sammelkennung versehen sind.

3. System nach einem der vorhergehenden Ansprüche,
**dadurch gekennzeichnet, dass**
für den Fall nicht geplanter Stillstände in Abhängigkeit von der Störungsanalyse aus den aktuell gespeicherten planbaren Arbeitsinhalten für den betreffenden Störfall relevante Arbeitsinhalte auswähl- und ausgebbar sind.

4. System nach einem der vorhergehenden Ansprüche,
**dadurch gekennzeichnet, dass**
die gespeicherten und aktualisierten Arbeitsinhalte zumindest Datensätze umfassen, die Informationen bezüglich Ersatzteilen, Verschleiss- und Verbrauchsmaterialien, Werkzeugen, Transportleistungen sowie Personal-Bedarfsdaten und zeitliche Ablauf- und Einsatzplanungsdaten enthalten.

5. System nach Anspruch 4,
**dadurch gekennzeichnet, dass**
die bestimmten Arbeitsinhalten entsprechenden Datensätze, die zu einem abgebildeten Abschnitt der Gesamtanlage gehören, mit zumindest zum Teil übereinstimmenden Datensätzen anderer Abschnitte der Gesamtanlage zu Aktualisierungszwecken abgleichbar sind.

6. System nach einem der vorhergehenden Ansprüche,
**dadurch gekennzeichnet, dass**
die Operations- und Verknüpfungseinheit über Monitoring-Systeme, Teleservice und dergleichen ansteuerbar ist.

7. System nach einem der vorhergehenden Ansprüche,
**dadurch gekennzeichnet, dass**
zumindest die Daten der zweiten Datenbank über eine Istwerterfassung von Daten der Gesamtanlage modifizierbar sind.

8. System nach einem der vorhergehenden Ansprüche,
**dadurch gekennzeichnet, dass**
die Operations- und Verknüpfungseinheit über aktivierbare Datenwege mit einer abfragbaren Datenbank zur Dokumentation behobener Störungen und Stillstände verbunden ist.

9. System nach einem der vorhergehenden Ansprüche,
**dadurch gekennzeichnet, dass**
die Operations- und Verknüpfungseinheit mit Einrichtungen zur in Abhängigkeit von aktuell aufgetretenen Störungen erfolgenden Signalisierung von drehenden Störungen in gleichen oder vergleichbaren Komponenten oder Komponentengruppen versehen ist.

## Revendications

1. Système pour l'optimisation assistée par ordinateur du rendement global d'une installation de fabrication de papier qui comprend une machine à papier avec préparation de pâte en amont et section constante pour le désaérage de la suspension fibreuse et pour l'ajustement de la concentration de la suspension fibreuse ainsi qu'au moins une unité d'enroulement de bande montée en aval ou au moins d'une unité partielle d'une telle installation, comprenant
une première mémoire de données affichant en fonction des composants au moins les unités de l'installation globale coopérant en continu en fonctionnement permanent,
au moins une deuxième mémoire de données pour mémoriser des volumes de travail prévisibles se rapportant à des déroulements et des opérations de travail définis, pour des arrêts prévus de l'installation,
ainsi qu'au moins une unité d'opération et de liaison basée sur ordinateur, activable également en fonction d'arrêts prévus ainsi que notamment d'arrêts non prévus, en vue de déterminer des paquets de travail, des pièces détachées et des matériaux de consommation et similaires nécessaires dans un cas particulier ainsi que pour les communiquer par le biais d'unités d'affichage et/ou d'impression,
**caractérisé en ce que**
l'on actualise au moins les données mémorisées d'abord sur la base de valeurs expérimentales dans la deuxième mémoire de données pour des paquets de travail définis et des composants de matériel associés et des données logistiques ainsi qu'en fonction d'informations concernant des saisies directes obtenues dans le cas d'arrêts prévus et aussi notamment imprévus, en vue d'obtenir des optimisations dynamiques propres.

2. Système selon la revendication 1,
**caractérisé en ce que**
au moins tous les composants et groupes de composants concernant des perturbations sont mémorisés de manière actualisable dans la première mémoire de données et de préférence les mêmes composants et groupes de composants sont pourvus d'un identificateur commun adressable.

3. Système selon l'une quelconque des revendications précédentes,
**caractérisé en ce que**
dans le cas d'arrêts imprévus, les volumes de travail pertinents pour la panne en question parmi des volumes de travail prévisibles actuellement mémorisés peuvent être choisis et délivrés en fonction de l'analyse des perturbations.

4. Système selon l'une quelconque des revendications précédentes,
**caractérisé en ce que**
les volumes de travail mémorisés et actualisés comprennent au moins des ensembles de données qui incluent des informations concernant des pièces détachées, des matériaux d'usure et de consommation, des outils, des services de transport ainsi que des données demandées personnelles et des données de prévisions temporelles de déroulement et d'utilisation.

5. Système selon la revendication 4,
**caractérisé en ce que**
les ensembles de données correspondant aux volumes de travail déterminés, qui appartiennent à une portion affichée de l'installation globale, peuvent être comparés avec des ensembles de données d'autres portions de l'installation globale coïncidant au moins en partie, en vue d'effectuer une actualisation.

6. Système selon l'une quelconque des revendications précédentes,
**caractérisé en ce que**
l'unité d'opération et de liaison peut être commandée par des systèmes de surveillance, téléservices et similaires.

7. Système selon l'une quelconque des revendications précédentes,
**caractérisé en ce que**
au moins les données de la deuxième base de données peuvent être modifiées par le biais d'une détection de valeurs réelles de données de l'installation globale.

8. Système selon l'une quelconque des revendications précédentes,
**caractérisé en ce que**
l'unité d'opération et de liaison est connectée par le biais de voies de données activables à une base de données consultable en vue de la documentation d'arrêts et de perturbations éliminés.

9. Système selon l'une quelconque des revendications précédentes,
**caractérisé en ce que**
l'unité d'opération et de liaison est munie de dispositifs pour la signalisation, en fonction de perturbations apparues actuellement, de perturbations imminentes dans les mêmes composants ou groupes de composants, ou des composants ou groupes de composants comparables.

## Claims

1. System for the computer-assisted optimization of the overall efficiency of a plant for producing paper, which comprises a paper machine with upstream stock preparation and approach system for deaerating the fibrous suspension and for adjusting the concentration of the fibrous suspension, and at least one web winder connected downstream, or at least one subunit of such a plant,
having a first component-related data storage unit depicting at least the units of the overall plant which interact continuously in continuous operation,
at least a second data storage unit for storing work contents which relate to defined plannable working operations and sequences for planned stoppages of the plant,
and also at least one computer-based operation and logical linking unit, which can be activated both on the basis of planned and in particular of unplanned stoppages in order to determine work packages, spare parts and consumables and the like required in the individual case and also their subsequent output via display and/or printout units,
**characterized in that**
at least the data initially stored in the second data storage unit on the basis of empirical values for defined work packages and associated hardware components and logistics data are updated both on the basis of information about direct inputs obtained during planned and also in particular during unplanned stoppages, in order to achieve inherently dynamic optimization.

2. System according to Claim 1, **characterized in that**, in the first data storage unit, at least all the fault-relevant components and component groups are stored such that they can be updated, and preferably identical components and component groups are provided with an addressable collective code.

3. System according to one of the preceding claims, **characterized in that**, for the case of unplanned stoppages, depending on the fault analysis, relevant work contents can be selected from the currently stored plannable work contents for the relevant fault and can be output.

4. System according to one of the preceding claims, **characterized in that** the stored and updated work contents comprise at least data sets which contain information with respect to spare parts, wearing and consumable materials, tools, transport services and personnel requirement data and time-related sequence and operation planning data.

5. System according to Claim 4, **characterized in that**, for updating purposes, the specific work contents of corresponding data sets which belong to a depicted section of the overall plant can be compared with data sets which match, at least to some extent, from other sections of the overall plant.

6. System according to one of the preceding claims, **characterized in that** the operation and logical linking unit can be activated via monitoring systems, teleservice and the like.

7. System according to one of the preceding claims, **characterized in that** at least the data from the second database can be modified by registering actual values of data from the overall plant.

8. System according to one of the preceding claims, **characterized in that**, for the documentation of rectified faults and stoppages, the operation and logical linking unit is connected via data paths that can be activated to a data base which can be interrogated.

9. System according to one of the preceding claims, **characterized in that** the operation and logical linking unit is provided with devices in order to signal impending faults in identical or comparable components or component groups on the basis of faults that have currently occurred.
